# EUROPEAN PATENT APPLICATION

(11) **EP 1 619 662 A1**
(43) Date of publication of application: **25.01.2006**
(21) Application number: 04291867.2
(22) Date of filing: 22.07.2004
(51) Int. Cl.: G10L 15/28

(54) **Speech recognition system**

(71) Applicant: ALCATEL, 75008 Paris (FR)
(72) Inventor: Kopp, Dieter Dipl.-Ing., 75428 Illingen (DE)
(74) Representative: LOUIS, PÖHLAU, LOHRENTZ

(57) **Abstract**

The present invention concerns a speech recognition system (8) and a method of recognizing spoken utterances of users. The speech recognition system (8) comprises the plurality of speech handling units (81-84), a scheduler (85) and a plurality of speech recognizers (86-88). A prompt is presented to the user. The speech handling unit (81) receives a spoken utterance from the user in response to that prompt. It generates a speech signal from the received spoken utterance, detects the start and the end of said utterance and creates a speech data set containing the content of the utterance. It sends a speech recognition request message to the scheduler (85). The scheduler (85) dynamically allocates one of the speech recognizers (86-88) to the speech data set, when the speech data set is available. The speech handling unit (81) transfers the speech data set to the allocated speech recognizer (86).

## Description

The present invention relates to a speech recognition system and a method of recognizing a spoken utterance of a user.

Automatic speech recognition (= ASR) is a process of automatically recognizing words or phrases from speech. Typically, the process receives an input acoustic signal from a microphone and converts the acoustic signal to an output set of text words. Automatic speech recognition can be used in a variety of applications as an interface between man and machine. It can be used to automatically retrieve information from a spoken communication or message and can be used for data entry, order entry and command and control.

Various sophisticated methods have been evolved and are still being improved for providing automatic speech recognition. Some of these methods employ statistical models and others base on extended knowledge bases with corresponding heuristic strategies.

Further, distributed speech recognition concepts are known for mobile communicational devices. According to such concepts, the speech recognizer is divided into two parts, a preprocessor applying primary speech recognition functions (preprocessing) located at the mobile device and a second part, applying secondary speech recognition functions and located at a central server.

Typical front-end operations of a distributed speech recognition process comprises parameterization , i.e. applying an algorithm to provide speech recognition parameter, e.g. consisting of coefficients known as mel cepstral coefficients and place them into vectors.

For example, US 2003/0182113 A1 describes such method of performing speech recognition. Audible speech is converted into speech signals at the mobile device. Further at the mobile device, speech recognition functions are performed on the speech signal to obtain a request for result. Then, the request for results is transmitted from the mobile device to a second computing device located remotely from the mobile device to obtain the results which are then transmitted back to the mobile device for completion of the speech recognition process.

Known applications such as data entry and data retrieval services provided within telecommunication networks applies a dedicated speech recognition unit for one user during the whole session, even during user guidance. Thereby, the recognizer has to be scaled to perform enough capability to handle the whole range of application requirements.

It is object of the present invention to increase the performance of automatic speech recognition systems.

The object of the present invention is achieved by a speech recognition system for recognizing spoken utterances of users, wherein the speech recognition system comprises a plurality of speech handling units, a scheduler and a plurality of speech recognizers, wherein each of the speech handling units generates a speech signal from a received spoken utterance, detects the start and the end of the utterance, create a speech data set containing the content of the utterance based on such speech signal and the results of said detection, send a speech recognition request message to the scheduler and transfers the speech data set to one of the speech recognizers allocated by the scheduler, and wherein the scheduler is adapted to dynamically allocate a speech recognizer of the plurality of speech recognizers to the speech data set, when the speech data set is available. The object of the present invention is further achieved by a method of recognizing a spoken utterance of a user, wherein the method comprises the steps of: presenting a prompt to the user; receiving a spoken utterance from said user in response to said prompt; detecting the start and the end of said utterance; generating a speech signal from said received spoken utterance; creating a speech data set containing the content of the utterance based on said speech signal and the result of the detection; sending a speech recognition request message to a scheduler; automatically allocating, by the scheduler, one of a plurality of speech recognizers to the speech data set, when the speech data set is available; and transferring the speech data set to the allocated speech recognizer.

According to the concept of the present invention, a speech recognizer is dynamically allocated to each utterance of the input acoustic signal, as soon as the speech data set containing the content of the utterance is created. Various advantages are achieved by the invention. The performance of the automatic speech recognition system is improved. The speech recognizer has no longer to be assigned for the whole session to a user, but is successively and dynamically allocated to each single utterance of the session. This heavily reduces the time a speech recognition unit is blocked for a user session which remarkably increases the efficiency and performance of the speech processing system. Further, an appropriate speech recognizer individually adapted to the specific speech recognition requirements of the respective single utterance can be dynamically allocated to each utterance. This improves speech recognition results, improves recognition capabilities and reduces resource consumption.

Further advantages are achieved by the embodiments of the invention indicated by the dependant claims.

According to a preferred embodiment of the invention, the pool of speech recognizers of the speech recognition system comprises different types of speech recognizers. Therefore, the scheduler is in a position to select an appropriate speech recognizer out of a set of speech recognizers having different capabilities. Context information of the respective utterance is transferred to the scheduler. Such context information contains information which makes it possible for the scheduler to select an appropriate speech recognition unit for the utterance. For example, such context information comprises information about the application presenting the prompt, for example type of application. Further, the context information may contain information about the dialog context of the prompt, for example dictation, command and control, name dialing, etc.. Further, the context information may also include information on the grammar, language model, etc..

Further, the scheduler accesses profile data of the various speech recognizers, the profile data containing information about capabilities of the respective speech recognizer. The scheduler correlates the received context information and the profile data to obtain and select an appropriate speech recognizer for the specific context of the respective utterance. As soon as the end of the utterance is detected, the speech data and, if necessary, grammar file etc. will be sent to the selected speech recognizer.

Such speech recognition process improves both, the resource performance and the recognition result.

Preferably, the speech recognition process uses a voice activity detection process or monitors a push-to-talk-key pressed during the speech input to detect the start and the end of the utterance. A speech signal is generated from said received spoken utterance and buffered until the end of utterance is detected. Then, a speech data set containing the content of the utterance is created.

It is possible that the speech data set does already contain preprocessed data, for example coded or parameterized data as used in the case of distributed speech processing. Preferably, the speech data set is already encoded in a form adapted to the speech recognizer selected for the respective utterance.

According to a preferred embodiment of the invention, the scheduler is part of a control unit which buffers the speech signal generated from the received spoken utterance. After a valid start of utterance, each recognition request will be sent to the control unit including information on the necessary recognizer. During the speech input, the voice data will be sent to the control unit (maybe encoded form) and buffered in the control unit. Thereby, it is possible for the control unit to apply a corresponding preprocessing and encoding on the speech data set of a received speech signal before allocating and blocking the selected speech recognizer.

According to a preferred embodiment of the invention, each of the plurality speech handling units is adapted to communicate with terminals via a communication network and thereby provides a speech recognition channel towards terminal accessing a service node with a speech recognition system.

But, it is also possible that the speech handling units are incorporated in terminals and communicate with the scheduler and the allocated speech recognizers via a communication network.

These as well as other features in advantages of the invention may be better appreciated by reading the following detailed description of presently preferred exemplary embodiments taken in conjunction with accompanying drawings of which:
- Fig. 1: shows a speech recognition system according to a first embodiment of the invention.
- Fig. 2: shows a speech recognition system according to a further embodiment of the invention.

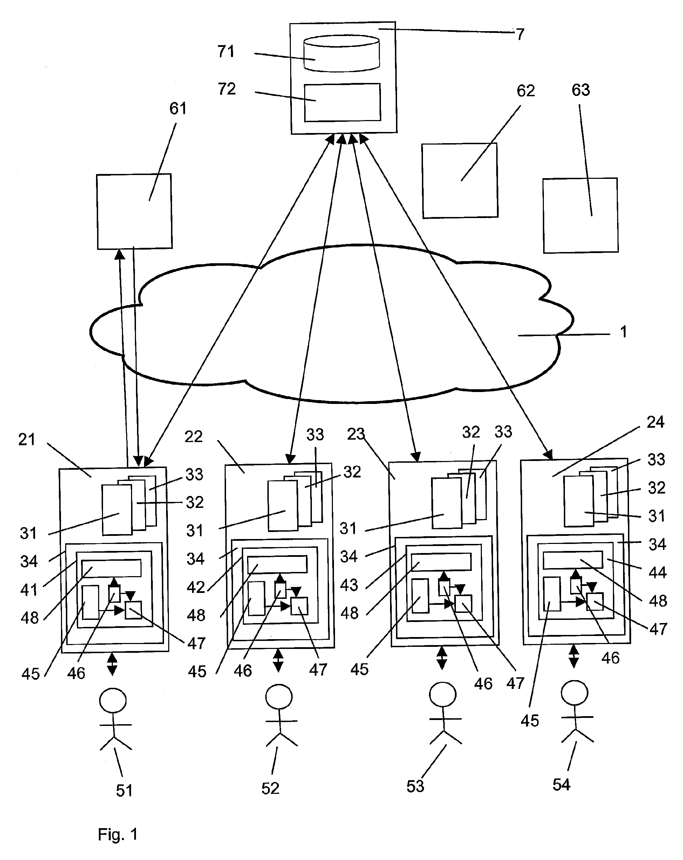

Fig. 1 shows a communication network 1, a plurality of speech recognizers 61 to 63, a scheduler 7, a plurality of terminals 21 to 24 and associated users 51 to 54.

The communication network 1 is a communication network capable of transferring data between the terminals 21 to 24, the scheduler 7 and the speech recognizers 61 to 63. Preferably, the communication network 1 is an IP based network, i.e. a communication network having a common level 3 IP layer (IP = Internet Protocol). Such network is typically composed of various physical sub-networks, for example based on Ethernet, ATM or wireless LAN technology. Further, it is possible that the communication network or one of the sub-networks of the communication network 1 is constituted of a public telephone network, for example a PSTN-network, an ISDN-network, or a GSM- or UMTS-network (PSTN = Public Switch Telecommunication Service; ISDN = Integrated Services Digital Network; UMTS = Universal Mobile Telecommunications System; ATM = Asynchrony Transfer Mode).

The terminals 21 to 24 are terminals capable of communicating via the communication network 1 with the scheduler 7 and the speech recognizers 61 to 63. Preferably, this communication bases on a packet switched data service using the TCP/IP protocol stack.

According to a preferred embodiment of the invention, the terminals 21 to 24 are cellular phones according to the GSM or UMTS standard. For example, the terminals 21 to 24 use the GPRS service provided by the communication network 1 to exchange data with the scheduler 7 and the speech recognizers 61 to 63 (GPRS = General Packet Radio Service). But, it is also possible that the terminals 21 to 24 are any other kinds of terminals capable of communicating via the communication network 1 which executes an application having the need for automatic speech recognition.

The assembly of the terminals 21 to 24 is in the following exemplified by hand of the assembly of the terminal 21.

The terminal 21 is composed of an electronic circuit with an radio part and at least one microprocessor, software programs executed by the microprocessor, and input and output means, for example a microphone, a loudspeaker, a display, a camera and a keypad. The functionalities of the terminal 21 are performed by the execution of software programs based on the aforementioned hardware platform. From functional point of view, the terminal 21 comprises a communication control unit 34 and one or more applications having the need for speech recognition, for example applications 31 to 33 indicated at Fig. 1.

For example, the application 31 is an email-application having a voice based command and control interface, the application 32 is an application that enables the user to dictate a text and provides a voice to text conversion and the application 33 is a voice-dialing application. Further, it is possible that one or more of the applications 31 to 33 represent the client-part of a distributed application having one or more server-parts located at one or more servers connected with the terminal 21 via the communication network 1.

The communication control unit 34 represents the "normal" functionalities of an enhanced cellular phone, which handles the radio interface to the communication network 1, the associated protocols stacks, for example the GSM and GPRS protocols stacks, and provides a system platform for the execution of the applications 31 to 33. Further, the communication control unit 34 contains a speech handling unit 41 that provides a speech recognition service for application of the terminal 21, for example for the applications 31 to 33.

From functional point of view, the speech handling unit 41 comprises a speech input unit 45, a buffer 47, a voice activity detection unit 46 and a control unit 48.

As soon as one of the applications 31-33 presents a prompt to the user 51 that requests the user 51 to perform a speech input, the respective application invokes the voice handling unit 41. The control unit 48 activates the speech input unit 45 which generates a speech signal from the spoken utterance received from the user 51 as response on said prompt. The voice activity detection circuit 46 automatically detects the start and the end of the utterance spoken by the user 51. Beside such automatic voice activity detection circuit, it is also possible that the voice activity detection unit 46 monitors a push to talk key which has to be pressed by the user 51 when presenting a voice input.

The speech input unit 45 digitizes the analog voice signal received via a microphone of the terminal 21, performs pre-filtering and, optionally, preprocessing of the voice signal, for example parameterization of the voice signal and a calculation of responding vectors and coefficients.

The buffer 47 stores the speech signal generated by the speech input unit 45.

If the control unit 48 detects the end of a utterance responded by the user 41 to the prompt of the application via the voice activity detection unit 46, the control unit 48 creates a speech data set containing the content of the utterance based on the speech signal stored in the buffer 47. Further, it sends a speech recognition request message through the communication network 1 to the scheduler 7.

Preferably, the speech recognition request message created by the control unit 48 additionally contains context information describing the context of the utterance stored in the buffer 47. For example, this context information comprises information about the application presenting the prompt, for example which one of the applications 31 to 34 has presented the prompt to the user 51. Further, the control unit 48 receives and forwards context information from the respective application which describes the dialog context within which the prompt is presented to the user.

Generally, the context information transferred from the control unit 48 to the scheduler 7 comprises information which ensures that the scheduler is in a position to allocate a speech recognizer to the respective utterance that perfectly fits and is scaled for recognizing the specific utterance. For example, a simple voice recognizer trained for number recognition is used for voice dialing, a more complex one with an enlarged thesaurus employing statistical models for a command and control context and an enhanced one having a extended knowledge base with corresponding heuristic strategies for a dictation context. As already mentioned, various different kinds of speech recognizers are today available on the market, wherein each one has its specific strength and weakness. The scheduler 7 selects that one of the available different kinds of speech recognizers that is the best one for recognizing the respective utterance.

It is possible that the control unit 48 classifies the application presenting the prompt as well as the dialog context of the utterance according to a general scheme agreed between the scheduler 7 and the terminals 21 to 24. Then, it transfers the respective classification of the utterance as context information to the scheduler 7. Further, it is possible that the context information includes also information on the grammar, on the language model etc..

As soon as the scheduler 7 informs the control unit 48 about the allocation of a speech recognizer, the control unit 48 contacts this speech recognizer, and transfers the speech data set to this speech recognizer. When receiving the result of the speech recognition, the control unit 48 forwards the result to the corresponding one of the applications 31 to 33 that had presented the prompt to the user 51.

The scheduler 7 is a software application adapted to dynamically allocate speech recognizers to speech data sets. Preferably, the scheduler 7 and the speech recognizers 61 to 63 are located on a common system platform which is constituted of a hardware platform containing one or several interlinked computers and a common software platform. Preferably, the scheduler 7 and the speech recognizers 61 to 63 are parts of a central speech recognition server providing a speech recognizing service within the communication network 1.

But, it is also possible that the scheduler 7 and the speech recognizers 61 to 63 are software applications executed at different servers of the communication network 1.

From functional point of view, the scheduler 7 comprises a data base 71 and a control unit 72.

The data base 71 stores profile data of speech recognizers allocated by the scheduler 7. For example, the data base 71 holds profile data of the speech recognizers 61, 62 and 63.

The profile data contains information about speech recognition capabilities of the respective speech recognizers. Further, these data optionally comprise information about classes of speech recognition task the respective speech recognition is capable of solving. Further, these data can comprise additional information about commercial aspects, for example licensing costs, to bring the scheduler 7 in a position to optimize the allocation also in view of commercial aspects.

Beside profile data of speech recognizers, the data base 71 comprises scheduling data indicating whether a speech recognizer is currently blocked because processing a speech data set. Such scheduling data optionally comprises a forecast of blocking periods and data enabling the reservation of time frames for future processing of speech data sets. Such additional information are used by the control unit 72 to optimize the scheduling process and thereby improves the efficiency of the voice recognition system.

Further, it is possible that the data base 71 holds user profiles of registered users storing, for example, speech recognition adaptation data used by the control unit 72 to select an appropriate speech recognizer and transferred to the allocated speech recognizer to adapt speech recognition to speech behavior of the respective user.

When receiving a speech recognition request message from one of the speech handling units 41 to 44 of the terminals 21 to 24, the control unit 72 dynamically allocates a speech recognizer to the corresponding speech data set based on the information stored in the data base 71. Preferably, the control unit 72 correlates context information received in parallel to the speech recognition request from the speech handling units 41 to 44 with profile data stored in the data base 71. By means of the scheduling data of the data base 71 the control unit 72 selects out of the resulting appropriate speech recognizers one available speech recognizer which is the optimum one in view of adaptation to the respective speech recognizing task and in view of commercial aspects.

According to a preferred embodiment of the invention, the speech handling units 41 to 44 send the speech recognition request message to the scheduler, before they have finished the creation of the speech data set, e.g. as soon as they have detected the start of an utterance. Thereby, the control unit 72 has some time for performing the selection process and might already reserve some future processing time of one or several appropriate speech recognizers. The control unit 72 allocates the selected speech recognizer as soon as the speech data set is available and transferred to the scheduler 7.

According to a further embodiment of the invention, the speech handling units 41 to 44 do not contain the buffer 47. The buffer 47 is part of the control unit 72, i.e. a generated speech signal is directly transferred from the speech handling unit 41 to the scheduler 7. Such approach allows the centralization of the buffering and the creation of the speech data set which improves the efficiency of the system.

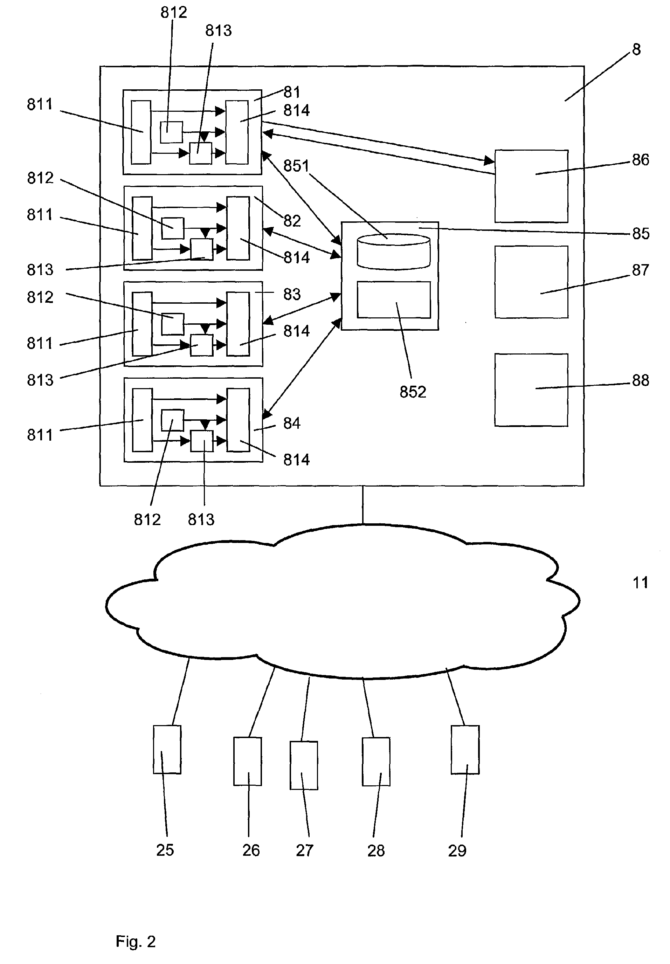

Further embodiments of the invention are exemplified by hand of Fig. 2C. Fig. 2 shows a service node with a speech recognition system 8, a communication network 11 and a plurality of terminals 25 to 29.

The communication network 11 is a telephone network, for example PSTN, ISDN, GSM or UMTS networks (PSTN = Public Switch Telecommunication Network; ISDN = Integrated Services Digital Network; GSM = Global System for Mobile Communication; UMTS = Universal Mobile Telecommunications System). The terminals 25 to 29 are telephone handsets, for example cellular phones.

The voice recognition system 8 is part of a service node of the communication network 11. It provides voice recognition tasks for one or more services provided by the service node within the communication network 11. When a service of the service node is contacted by a user via one of the terminals 25 to 29, the respective service presents at different places of the dialog a prompt to the user and transfers the received spoken utterance containing the response of the user to the speech recognition system 8.

The speech recognition system 8 comprises a set of speech recognizers 86 to 88, a set of speech handling units 81 to 84 and a central scheduler 85.

Preferably, the elements of the speech recognition system 8 are placed on a common processing board of the service node, which contains one or more microprocessors, peripheral units for speech processing and various application programs executed by microprocessors and digital signal processors.

The details of the speech handling units 81 to 84 are in the following exemplified by hand of the details of the speech handling unit 81.

The speech handling unit 81 has a input unit 811, a voice activity detection circuit 812, a buffer 813 and a control unit 814.

The input unit 811 generates a speech signal from a utterance of a user received via a communication connection established through the communication network 1. For example, an ISDN connection is established between the terminal 25 and the voice recognition system 8. The input unit 811 comprises the necessary interface unit to interface this communication connection, to pre-filter the incoming data stream and generating an appropriate speech signal from the received spoken utterance.

The voice activity detection circuit 812, the buffer 813 and the control unit 814 perform the functionalities of the voice activity detection unit 46, the buffer 47 and the control unit 48 of the voice handling unit 41 according to Fig. 1. The buffer 813 buffers the generated speech signal. The control unit 814 creates the speech data set, sends the speech recognition request message and the context information to the scheduler 85, transfers the speech data set to the allocated speech recognizer, for example to the speech recognizer 86, and forwards the received speech recognition result to the corresponding service application.

The scheduler 85 comprises a data base 851 and a control unit 852 which performs the functionalities of the data base 71 and the control unit 72 according to Fig. 1. The data base 851 stores profile data of the speech recognizers 86 to 88 describing the capabilities of the speech recognizers. Further it contains a scheduling table describing which one of the speech recognizers 86 to 88 is currently blocked due to the execution of a speech data set.

## Claims

1. A method of recognizing a spoken utterance of a user (51-54), the method comprising the steps of:
presenting a prompt to the user (51-54);
receiving a spoken utterance from said user (51-54) in response to said prompt;
detecting the start and the end of said utterance;
generating a speech signal from said received spoken utterance;
creating a speech data set containing the content of the utterance based on said speech signal and the result of the detection;
sending a speech recognition request message to a scheduler (7, 85);
dynamically allocating, by the scheduler (7, 85), one of a plurality of speech recognizers (61-63; 86-88) to the speech data set, when the speech data set is available; and
transferring the speech data set to the allocated speech recognizer (61; 86).

2. The method of claim 1,
**characterized in**
**that** the scheduler (7; 85) selects the allocated speech recognizer (61; 86) out of a set of speech recognizers (61-63; 86-88), the set comprising different types of speech recognizers.

3. The method of claim 1,
**characterized in**
**that** the method comprises the further steps of: transferring context information of the utterance to this scheduler (7; 85); holding profile data of the speech recognizers (61-63; 86-88) of the set of speech recognizers, the profile data containing information about capabilities of the respective speech recognizer; selecting, at the scheduler (7; 85), an appropriate speech recognizer based on the received context information and the profile data; and allocating the appropriate selected speech recognizer (7; 86).

4. The method of claim 3,
**characterized in**
**that** the context information comprises information about the application presenting the prompt.

5. The method of claim 3 or claim 4,
**characterized in**
**that** the context information comprises information about the dialog context of the prompt.

6. A speech recognition system (8) for recognizing spoken utterances of users (51-54), the speech recognition system (8) comprising a plurality of speech handling units (21-24; 81-84), a scheduler (7; 85) and a plurality of speech recognizers (61-63; 86-88), wherein each of the speech handling units (21-24; 81-84) is adapted to generate a speech signal from a received spoken utterance, to detect the start and the end of said utterance, to create a speech data set containing the content of the utterance based on said speech signal and the results of the detection, to send a speech recognition request message to the scheduler (7; 85) and to transfer the speech data set to one of the speech recognizers (61-63; 86-88) allocated by the scheduler (7; 85), and wherein the scheduler (7; 85) is adapted to dynamically allocate a speech recognizer (61; 86) of the plurality of speech recognizers to the speech data set, when the speech data set is available.

7. The speech recognition system of claim 6,
**characterized in**
**that** one or more of the speech handling units (21-24) is adapted to monitor a push-to-talk key.

8. The speech recognition system (8) of claim 6 or claim 7,
**characterized in**
**that** one or more of the speech handling units (21-24; 81-84) comprises a voice activity detection circuit.

9. The speech recognition system (8) of claim 6,
**characterized in**
**that** each of the speech handling units (81-84) is adapted to communicate with a terminal via a telecommunication network (11).

10. The speech recognition system of claim 6,
**characterized in**
**that** each speech handling unit (41-44) is incorporated in a terminal (21-24) and adapted to communicate with the scheduler (7) via a communication network (1).
